(19) Europäisches Patentamt / European Patent Office / Office européen des brevets

(11) **EP 4 692 402 A1**

(12) **EUROPEAN PATENT APPLICATION**
published in accordance with Art. 153(4) EPC

(43) Date of publication:
**11.02.2026 Bulletin 2026/07**

(21) Application number: **24784992.0**

(22) Date of filing: **05.04.2024**

(51) International Patent Classification (IPC):
*C22C 38/00* (2006.01)   *C21D 8/12* (2026.01)
*C21D 9/46* (2006.01)   *C22C 38/60* (2006.01)
*H01F 1/147* (2006.01)

(52) Cooperative Patent Classification (CPC):
C21D 8/12; C21D 9/46; C22C 38/00; C22C 38/60;
H01F 1/147

(86) International application number:
**PCT/JP2024/014127**

(87) International publication number:
**WO 2024/210210 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.04.2023 JP 2023061313**

(71) Applicant: NIPPON STEEL CORPORATION
Chiyoda-ku
Tokyo 100-8071 (JP)

(72) Inventors:
• **FUKUCHI, Minako**
  **Tokyo 100-8071 (JP)**
• **NATORI, Yoshiaki**
  **Tokyo 100-8071 (JP)**

(74) Representative: **Vossius & Partner**
**Patentanwälte Rechtsanwälte mbB**
**Siebertstraße 3**
**81675 München (DE)**

(54) **NONORIENTED ELECTROMAGNETIC STEEL SHEET, CORE, AND ROTARY ELECTRIC MACHINE**

(57)    The non-oriented electrical steel sheet includes, as a chemical composition, in terms of mass%, 0.0100% or less of C, 1.50 to 4.00% of Si, 0.0001 to 1.00% of sol.Al, 0.0100% or less of S, 0.0100% or less of N, and 2.50 to 5.00% in total of one or more selected from the group consisting of Mn, Ni, and Cu, wherein, in terms of mass%, when [Mn] is defined as the Mn content, [Ni] is defined as the Ni content, [Cu] is defined as the Cu content, [Si] is defined as the Si content, [sol.Al] is defined as the sol.Al content, and [P] is defined as the P content, $(2 \times [Mn] + 2.5 \times [Ni] + [Cu]) - ([Si] + 2 \times [sol.Al] + 4 \times [P]) \geq 1.50\%$ is satisfied; has A411-011 of 15.0% or more; has a B50D of 1.70 T or more; and has a W10D/400D of 10.4 W/kg or less.

EP 4 692 402 A1

**Description**

TECHNICAL FIELD

The present invention relates to a non-oriented electrical steel sheet, a core, and a rotary electric machine.
Priority is claimed on Japanese Patent Application No. 2023-061313, filed April 5, 2023, the content of which is incorporated herein by reference.

BACKGROUND ART

Electrical steel sheets are used as a material of a core (iron core) of electrical equipment. Examples of the electrical equipment include a drive motor mounted on an automobile, various compressor motors typified by an air conditioner and a refrigerator, and home or industrial power generators. Such electrical equipment is required to have high energy efficiency, miniaturization, and high output. Therefore, an electrical steel sheet used as a core of electrical equipment is required to have a low iron loss and a high magnetic flux density.
The iron loss can be decreased by reducing the sheet thickness. However, reducing the sheet thickness leads to a decrease in the production efficiency of motors, and thus a method for reducing the iron loss while maintaining the sheet thickness has been required.
In response to such a problem, texture control is a resolution to obtain a low iron loss and a high magnetic flux density. So far, techniques have been proposed for developing a microstructure ($\alpha$ fiber), which has a magnetization easy axis in the steel sheet surface, is advantageous for improving the magnetic characteristics, and can be relatively easily developed by rolling process in hot rolling and cold rolling, which are essential steps of steel sheet manufacture. Specifically, a microstructure in which the <110> direction is substantially parallel to the rolling direction (RD) is formed.
For example, Patent Document 1 states that cooling is performed to 250°C or lower at a cooling rate of 200 °C/sec or more within 3 seconds after hot rolling, and that annealing is not performed between hot rolling and cold rolling, and the cumulative rolling reduction is 88% or more in the cold rolling. Patent Document 1 discloses that this makes it possible to manufacture an electrical steel sheet developed in the { 100}<011> orientation at the surface of the steel sheet.
On the other hand, in order to improve magnetic characteristics, techniques of developing the {411} orientation, which is rotated by 20° from the { 100} orientation, has been also proposed. Patent Documents 2 to 8 each discloses a technique of developing the {411} orientation, and states that the grain size is optimized in the hot-rolled sheet, and that the $\alpha$ fiber is enhanced in the texture of the hot-rolled sheet.
Specifically, Patent Document 2 states that cold rolling is performed on a hot-rolled sheet in which the development degree in the {211} orientation is higher than the development degree in the {411} orientation, and the cumulative rolling reduction is 80% or more in the cold rolling. Patent Document 2 discloses that this makes it possible to manufacture an electrical steel sheet developed in the {411} orientation at the surface of the steel sheet.
Patent Documents 3 and 4 describe that the slab heating temperature is 700°C or more and 1150°C or less, the finish rolling start temperature is 650°C or more and 850°C or less, and the finish rolling end temperature is 550°C or more and 800°C or less, and the cumulative rolling reduction is 85 to 95% in the cold rolling. Patent Documents 3 and 4 disclose that this makes it possible to manufacture an electrical steel sheet developed in the {100} orientation and the {411} orientation at the surface of the steel sheet.
Patent Document 5 relates to a method for manufacturing a non-oriented electrical steel sheet, and states that, when strip casting or the like is performed, and $\alpha$ fibers are developed up to the vicinity of the steel sheet surface layer of a hot-rolled coil steel sheet, the {h11 }<1/h12> orientation, particularly the { 100}<012> to the {411 }<148> orientation, is recrystallized in the subsequent hot-rolled sheet annealing.
Patent Document 6 relates to a non-oriented electrical steel sheet in which the {100} plane intensity is 2.4 or more in the inverse pole figure, the area fraction of grains having a {100} crystal orientation (tolerance within 20°) is 18% or more in the entire visual field when measured by electron backscatter diffraction (EBSD), the average grain size is 20 $\mu$m or less, the sheet thickness is 0.10 to 0.30 mm, and Q represented by Q = [Si] - 0.5 $\times$ [Mn] is 2.00 or more when [Si] is defined as the Si content (mass%) and [Mn] is defined as the Mn content (mass%), and discloses that the existence probability of {411} orientation grains, which are superior in magnetic characteristics, is enhanced to improve magnetic characteristics and realize low iron loss and high magnetic flux density. Patent Document 6 states that, when $\alpha$ fibers are developed up to the vicinity of the steel sheet surface layer of a hot-rolled coil steel sheet, the {h11}<1/h12> orientation, particularly the <012> to the {411}<148> orientation, is recrystallized in the subsequent hot-rolled sheet annealing.
Patent Document 7 discloses a non-oriented electrical steel sheet that is an $\alpha$-$\gamma$ transformation type; includes, as a chemical composition, in terms of mass%, 2.0 to 4.5% of Si, more than 3.0 to 5.0% of Mn, and a balance of Fe, optional elements, and impurity elements; and has an X-ray random intensity ratio of the {100}<011> crystal orientation of 0 to 15.0 and an X-ray random intensity ratio of the {411 }<148> crystal orientation of 4.0 to 200 at the depth of 1/4 of the sheet thickness from the sheet surface.

Patent Document 8 relates to a non-oriented electrical steel sheet in which the {100} plane intensity is 2.4 or more in the inverse pole figure, the area fraction of grains having a {100} crystal orientation (tolerance within 20°) is 18% or more in the entire visual field when measured by electron backscatter diffraction (EBSD), the average grain size is 55 to 200 $\mu$m, the sheet thickness is 0.10 to 0.30 mm, a Cr oxide-containing layer having a thickness of 0.01 $\mu$m or more and 0.5 $\mu$m or less is included on the surface of the steel sheet, and $10.00\% \leq 2[Si] + 2[Al] + [Cr] < 15.00\%$ and $(2[Al] + [Cr])/2[Si] - 10t^2 \leq 0.35$ are satisfied when [Si] is defined as the Si content (mass%), [Al] is defined as the Al content (mass%), [Cr] is defined as the Cr content (mass%), and the sheet thickness (mm) of the non-oriented electrical steel sheet is defined as t, and discloses that the existence probability of {411} orientation grains, which are superior in magnetic characteristics, is enhanced to realize low iron loss and high magnetic flux density.

Citation List

Patent Documents

Patent Document 1: Japanese Unexamined Patent Application, First Publication No. 2017-145462
Patent Document 2: Japanese Patent No. 4218077
Patent Document 3: Japanese Patent No. 5256916
Patent Document 4: Japanese Unexamined Patent Application, First Publication No. 2011-111658
Patent Document 5: Japanese Unexamined Patent Application, First Publication No. 2019-183185
Patent Document 6: Japanese Unexamined Patent Application, First Publication No. 2020-76138
Patent Document 7: Japanese Unexamined Patent Application, First Publication No. 2020-100860
Patent Document 8: Japanese Unexamined Patent Application, First Publication No. 2020-139198

SUMMARY OF INVENTION

Technical Problem

The present inventors studied the above techniques, and found a problem that, when the {100}<011> orientation is enhanced to improve magnetic characteristics in accordance with Patent Document 1, rapid cooling immediately after hot rolling is necessary, and the manufacturing load is high. Furthermore, the present inventors found that, when a steel sheet enhanced in the {100}<011> orientation as Patent Document 1 is used as a calked core material, core characteristics as expected from the material cannot be obtained in some cases. The present inventors studied the cause thereof, and found that this is because the {100}<011> orientation becomes high in the magnetic characteristics change against stress, especially, in magnetic characteristics deterioration when compressive stress acts (stress sensitivity).

In addition, it has been found that, in the techniques of Patent Documents 2 to 8, the {411} orientation is developed, but the <011> orientation, in-plane orientation, is weakly developed, and therefore magnetic characteristics are not sufficiently enhanced in the 45° direction with respect to the rolling direction of the steel sheet, which is a characteristic of the $\alpha$ fiber. It has been considered that the fact that the in-plane orientation is not aligned with the <011> orientation, that is, the deviation from the $\alpha$ fiber is large, is a factor of inhibiting the development in the {411} orientation as the plane orientation, and may be a factor of not sufficiently improving the magnetic characteristics.

In view of the above problems, an object of the present invention is to provide a non-oriented electrical steel sheet having low stress sensitivity and excellent magnetic characteristics in a direction of $\pm 45$ degrees with respect to the rolling direction (the direction of 45 degrees and the direction of 135 degrees) on the premise of a manufacturing method in which the manufacturing load does not increase. Another object of the present invention is to provide a core (iron core) manufactured using the non-oriented electrical steel sheet, and a rotary electric machine such as a motor or a generator manufactured using the core.

Solution to Problem

The present inventors further studied by focusing on the {411} plane, which is a plane orientation rotated by 20° from the {100} plane. As a result, the present inventors have found that magnetic characteristics (particularly, magnetic characteristics in a direction of $\pm 45°$ with respect to the rolling direction) are further improved by developing a special orientation of {411}<011>. In addition, it has also been found that the steel sheet in which {411}<011> is developed has lower stress sensitivity than the steel sheet in which {100}<011> is developed.

In addition, the present inventors studied and also found that it is effective for improving magnetic characteristics that the temperature raising rate during intermediate annealing is increased and the final annealing temperature is higher than ever according to the chemical composition.

As a result of further intensive studies based on such findings, the present inventors have conceived various embodiments of the invention shown below.

[1] In an embodiment of the present invention, a non-oriented electrical steel sheet includes, as a chemical composition, in terms of mass%, 0.0100% or less of C, 1.50 to 4.00% of Si, 0.0001 to 1.00% of sol.Al, 0.0100% or less of S, 0.0100% or less of N, 2.50 to 5.00% in total of one or more selected from the group consisting of Mn, Ni, and Cu, 0.000 to 1.000% of Co, 0.000 to 0.400% of Sn, 0.000 to 0.400% of Sb, 0.000 to 0.400% of P, 0.0000 to 0.0100% in total of one or more selected from the group consisting of Mg, Ca, Sr, Ba, Ce, La, Nd, Pr, Zn, and Cd, wherein, in terms of mass%, when [Mn] is defined as the Mn content, [Ni] is defined as the Ni content, [Cu] is defined as the Cu content, [Si] is defined as the Si content, [sol.Al] is defined as the sol.Al content, and [P] is defined as the P content, a formula (1) below is satisfied, and a balance of Fe and impurities; the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD; the non-oriented electrical steel sheet having a magnetic flux density B50D of 1.70 T or more, wherein the B50D is the average of a magnetic flux density in a 45 degree direction with respect to a rolling direction and the magnetic flux density in a 135 degree direction with respect to the rolling direction; and the non-oriented electrical steel sheet having an iron loss W10D/400D of 10.4 W/kg or less, wherein the W10D/400D is the average of an iron loss in a 45 degree direction with respect to the rolling direction and the iron loss in a 135 degree direction with respect to the rolling direction:

$$(2 \times [\mathrm{Mn}] + 2.5 \times [\mathrm{Ni}] + [\mathrm{Cu}]) - ([\mathrm{Si}] + 2 \times [\mathrm{sol.Al}] + 4 \times [\mathrm{P}]) \geq 1.50\% \cdots (1).$$

[2] In the non-oriented electrical steel sheet according to [1], when B50L is defined as an average of a magnetic flux density in a 0 degree direction with respect to the rolling direction and a magnetic flux density in a 90 degree direction with respect to the rolling direction, the B50D and the B50L may satisfy a formula (2) below:

$$\mathrm{B50D/B50L} \geq 1.05 \cdots (2).$$

[3] In another embodiment of the present invention, a core includes a non-oriented electrical steel sheet, the non-oriented electrical steel sheet including, as a chemical composition, in terms of mass%, 0.0100% or less of C, 1.50 to 4.00% of Si, 0.0001 to 1.00% of sol.Al, 0.0100% or less of S, 0.0100% or less of N, 2.50 to 5.00% in total of one or more selected from the group consisting of Mn, Ni, and Cu, 0.000 to 1.000% of Co, 0.000 to 0.400% of Sn, 0.000 to 0.400% of Sb, 0.000 to 0.400% of P, 0.0000 to 0.0100% in total of one or more selected from the group consisting of Mg, Ca, Sr, Ba, Ce, La, Nd, Pr, Zn, and Cd, wherein, in terms of mass%, when [Mn] is defined as the Mn content, [Ni] is defined as the Ni content, [Cu] is defined as the Cu content, [Si] is defined as the Si content, [sol.Al] is defined as the sol.Al content, and [P] is defined as the P content, a formula (1) below is satisfied, and a balance of Fe and impurities; the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD; the non-oriented electrical steel sheet having a magnetic flux density B50D of 1.70 T or more, wherein the B50D is an average of a magnetic flux density in a 45 degree direction with respect to a rolling direction and a magnetic flux density in a 135 degree direction with respect to the rolling direction; and the non-oriented electrical steel sheet having an iron loss W10D/400D of 10.4 W/kg or less, wherein the W10D/400D is an average of an iron loss in a 45 degree direction with respect to the rolling direction and an iron loss in a 135 degree direction with respect to the rolling direction:

$$(2 \times [\mathrm{Mn}] + 2.5 \times [\mathrm{Ni}] + [\mathrm{Cu}]) - ([\mathrm{Si}] + 2 \times [\mathrm{sol.Al}] + 4 \times [\mathrm{P}]) \geq 1.50\% \cdots (1).$$

[4] In another embodiment of the present invention, a rotary electric machine includes: a stator; a rotor arranged on an inner peripheral side of the stator; and a case that is in close contact with the stator from an outer peripheral side of the stator and fixes the stator, wherein at least one of the stator and the rotor has a core constituted by a non-oriented electrical steel sheet including, as a chemical composition, in terms of mass%, 0.0100% or less of C, 1.50 to 4.00% of Si, 0.0001 to 1.00% of sol.Al, 0.0100% or less of S, 0.0100% or less of N, 2.50 to 5.00% in total of one or more selected from the group consisting of Mn, Ni, and Cu, 0.000 to 1.000% of Co, 0.000 to 0.400% of Sn, 0.000 to 0.400% of Sb, 0.000 to 0.400% of P, 0.0000 to 0.0100% in total of one or more selected from the group consisting of Mg, Ca, Sr, Ba, Ce, La, Nd, Pr, Zn, and Cd, wherein, in terms of mass%, when [Mn] is defined as the Mn content, [Ni] is defined as the Ni content, [Cu] is defined as the Cu content, [Si] is defined as the Si content, [sol.Al] is defined as the sol.Al content, and [P] is defined as the P content, a formula (1) below is satisfied, and a balance of Fe and impurities; the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD; the non-oriented electrical steel sheet having a magnetic flux density B50D of 1.70 T or more, wherein the B50D is an average of a magnetic flux density in a 45 degree direction with respect to a rolling direction and a magnetic flux density in a 135 degree direction with respect to the rolling direction; and the non-oriented electrical steel sheet having an iron loss W10D/400D of 10.4 W/kg or less, wherein the W10D/400D is an average of an iron loss in a 45 degree direction with respect to the rolling direction and an iron loss in a 135 degree direction with respect to the rolling direction:

$$(2 \times [\text{Mn}] + 2.5 \times [\text{Ni}] + [\text{Cu}]) - ([\text{Si}] + 2 \times [\text{sol.Al}] + 4 \times [\text{P}]) \geq 1.50\% \cdots (1).$$

Advantageous Effects of Invention

According to the above embodiments of the present invention, it is possible to provide a non-oriented electrical steel sheet having low stress sensitivity and excellent magnetic characteristics in a direction of ±45 degrees with respect to the rolling direction (may be simply referred to as a ±45 degree direction); a core manufactured using the non-oriented electrical steel sheet; and a rotary electric machine manufactured using the core.

DESCRIPTION OF EMBODIMENTS

Hereinafter, the non-oriented electrical steel sheet according to an embodiment of the present invention (non-oriented electrical steel sheet according to the embodiment), the core (core according to the embodiment), and the rotary electric machine (rotary electric machine according to the embodiment), and preferable manufacturing methods thereof will be described.

[Non-Oriented Electrical Steel Sheet]

The non-oriented electrical steel sheet according to the embodiment has a predetermined chemical composition;

the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD;
the non-oriented electrical steel sheet having a magnetic flux density B50D of 1.70 T or more, wherein the B50D is an average of a magnetic flux density in a 45 degree direction with respect to a rolling direction and a magnetic flux density in a 135 degree direction with respect to the rolling direction; and
the non-oriented electrical steel sheet having an iron loss W10D/400D of 10.4 W/kg or less, wherein the W10D/400D is an average of an iron loss in a 45 degree direction with respect to the rolling direction and an iron loss in a 135 degree direction with respect to the rolling direction.

In the non-oriented electrical steel sheet according to the embodiment, the rolling direction can be determined by visually observing a rolling mark. The rolling mark can also be observed in the core into which the non-oriented electrical steel sheet has been processed.

<Chemical Composition>

First, the chemical composition of the non-oriented electrical steel sheet according to the embodiment will be described. In the following description, "%", which is a unit of the content of each element, means "mass%" unless otherwise specified. In addition, a numerical range represented by "to" means a range including the numerical values described before and after "to" as the lower limit and the upper limit.
The non-oriented electrical steel sheet according to the embodiment has a chemical composition in which ferrite-austenite transformation (hereinafter, α-γ transformation) can occur to some extent (chemical composition in which even though the entirety is not transformed to γ, a certain amount of γ is generated, when heated), and includes, as a chemical composition, 0.0100% or less of C, 1.50 to 4.00% of Si, 0.0001 to 1.00% of sol.Al, 0.0100% or less of S, 0.0100% or less of N, 2.50 to 5.00% in total of one or more selected from the group consisting of Mn, Ni, and Cu, 0.000 to 1.000% of Co, 0.000 to 0.400% of Sn, 0.000 to 0.400% of Sb, 0.000 to 0.400% of P, 0.0000 to 0.0100% in total of one or more selected from the group consisting of Mg, Ca, Sr, Ba, Ce, La, Nd, Pr, Zn, and Cd, and a balance of Fe and impurities. Furthermore, the amount of each of Mn, Ni, Cu, Si, sol.Al, and P satisfies the predetermined conditions described later. Examples of the impurities include impurities contained in raw materials such as ore and scrap, and impurities mixed in the manufacture step.

(C: 0.0100% or less)

C is an element precipitated as a fine carbide. Such a fine carbide inhibits grain growth, thereby increasing iron loss and causing magnetic aging. Therefore, the lower the C content, the better. Such a phenomenon is remarkable when the C content is more than 0.0100%. Therefore, the C content is 0.0100% or less. The C content is preferably 0.0050% or less, and more preferably 0.0025% or less. The lower limit of the C content is not particularly limited, but the C content is preferably 0.0005% or more in consideration of the cost of the decarburization treatment at the time of refining.

(Si: 1.50 to 4.00%)

Si is an element that increases electric resistance, reduces eddy-current loss, and reduces iron loss. In addition, Si is an element that increases the yield ratio and improves the punching workability into a core. When the Si content is less than 1.50%, these operation and effects cannot be sufficiently obtained. Therefore, the Si content is 1.50% or more.
On the other hand, when the Si content is more than 4.00%, the magnetic flux density decreases, punching workability decreases due to an excessive increase in hardness, or cold rolling becomes difficult. Therefore, the Si content is 4.00% or less.

(Sol.Al: 0.0001 to 1.00%)

Sol.Al is an element that increases electrical resistance, reduces eddy-current loss, and reduces iron loss. Sol.Al is an element that also contributes to improvement of the relative magnitude of the magnetic flux density B50 with respect to the saturation magnetic flux density. Here, the magnetic flux density B50 is a magnetic flux density in a magnetic field of 5000 A/m. When the sol.Al content is less than 0.0001%, these effects cannot be sufficiently obtained. Al also has an effect of promoting desulfurization in steelmaking. Therefore, the sol.Al content is 0.0001% or more. The sol.Al content is preferably 0.001% or more, and more preferably 0.10% or more.
On the other hand, when the sol.Al content is more than 1.00%, the magnetic flux density decreases. Therefore, the sol.Al content is 1.00% or less.

(S: 0.0100% or less)

S is not an essential element, and is, for example, an element contained in steel as an impurity. S is precipitated as fine MnS and inhibits recrystallization and grain growth in annealing. Therefore, the lower the S content, the better. Such increase in iron loss and decrease in magnetic flux density due to the inhibition of recrystallization and grain growth are remarkable when the S content is more than 0.0100%. Therefore, the S content is 0.0100% or less. The lower limit of the S content is not particularly limited, but the S content is preferably 0.0003% or more in consideration of the cost of the desulfurization treatment at the time of refining.

(N: 0.0100% or less)

N is an element that deteriorates magnetic characteristics through formation of fine precipitates such as TiN and AlN. Therefore, the lower the N content, the better. Such deterioration of magnetic characteristics is remarkable when the N content is more than 0.0100%, and thus the N content is 0.0100% or less. The lower limit of the N content is not particularly limited, but the N content is preferably 0.0010% or more in consideration of the cost of the denitrification treatment at the time of refining.

(One or more selected from the group consisting of Mn, Ni, and Cu: 2.50 to 5.00% in total)

These elements are elements necessary for causing $\alpha$-$\gamma$ transformation. The non-oriented electrical steel sheet according to the embodiment contains at least one of these elements in a total amount of 2.50% or more.
On the other hand, when the content of these elements exceeds 5.00% in total, not only the cost increases but also the magnetic flux density may decrease. Therefore, the content of at least one of these elements is 5.00% or less in total.
The content of each of Mn, Ni, and Cu is not limited, but the Mn content is preferably 1.50% or more from the viewpoint of specific resistance.

In addition, the following conditions are further satisfied as conditions under which α-γ transformation occurs and good magnetic characteristics are obtained. That is, when [Mn] is defined as the Mn content (mass%), [Ni] is defined as the Ni content (mass%), [Cu] is defined as the Cu content (mass%), [Si] is defined as the Si content (mass%), [sol.Al] is defined as the sol.Al content (mass%), and [P] is defined as the P content (mass%), the formula (1) below is satisfied:

$$(2 \times [Mn] + 2.5 \times [Ni] + [Cu]) - ([Si] + 2 \times [sol.Al] + 4 \times [P]) \geq 1.50\% \cdots (1).$$

When the above-described formula (1) is not satisfied, the α-γ transformation does not occur, or even if the α-γ transformation occurs, the transformation point is high, so that a sufficient magnetic flux density is not obtained even if the below-described manufacturing method is applied.

The non-oriented electrical steel sheet according to the embodiment basically includes, as a chemical composition, the above elements, and a balance of Fe and impurities (impurities other than the above), but may include Co, Sn, Sb, P, Mg, Ca, Sr, Ba, Ce, La, Nd, Pr, Zn, and Cd in the following ranges instead of a part of Fe in the balance. Since these elements are not necessarily contained, the lower limit is 0%. In addition, it is acceptable that these elements are not intentionally added and contained as impurities.

(Co: 0.000 to 1.000%)

Co is an element that increases the magnetic flux density. Therefore, Co may be contained as necessary.

On the other hand, when Co is excessively contained, the cost increases. Therefore, the Co content is 1.000% or less.

(Sn: 0.000 to 0.400%, Sb: 0.000 to 0.400%)

Sn and Sb are elements that improve the texture after cold rolling and recrystallization to improve the magnetic flux density. Therefore, one or two of these elements may be contained as necessary. In the case of imparting a further effect such as magnetic characteristics, it is preferable to contain one or more selected from the group consisting of 0.020 to 0.400% of Sn and 0.020 to 0.400% of Sb.

On the other hand, when these elements are excessively contained, steel embrittles. Therefore, the Sn content and the Sb content are both 0.400% or less.

(P: 0.000 to 0.400%)

P is an element effective for ensuring the hardness of the steel sheet after recrystallization. P is also an element having a suitable influence on magnetic characteristics. Thus, P may be contained. In the case of obtaining these effects, the P content is preferably 0.020% or more.

On the other hand, when P is excessively contained, steel embrittles. Therefore, the P content is 0.400% or less.

(One or more selected from the group consisting of Mg, Ca, Sr, Ba, Ce, La, Nd, Pr, Zn, and Cd: 0.0000 to 0.0100% in total)

Mg, Ca, Sr, Ba, Ce, La, Nd, Pr, Zn, and Cd are elements that react with S in the molten steel during casting of the molten steel to generate a sulfide or an oxysulfide or precipitates of both of them. Hereinafter, Mg, Ca, Sr, Ba, Ce, La, Nd, Pr, Zn, and Cd may be collectively referred to as "coarse precipitate forming element". The grain size of the precipitate of the coarse precipitate forming element is about 1 to 2 μm, and is much larger than the grain size of fine precipitates such as MnS, TiN, and AlN (about 100 nm). Therefore, these fine precipitates adhere to the precipitate of the coarse precipitate forming element, and it becomes difficult to inhibit recrystallization and grain growth in annealing such as intermediate annealing. In order to sufficiently obtain these operation and effects, these elements are in an amount of preferably 0.0005% or more in total, and more preferably 0.0010% or more.

On the other hand, when the total amount of these elements exceeds 0.0100%, the total amount of sulfide or oxysulfide or both is excessive, and recrystallization and grain growth in annealing such as intermediate annealing are inhibited. Therefore, the amount of the coarse precipitate forming element is 0.0100% or less in total.

The chemical composition is determined by the following method.

The chemical composition may be measured by a general analysis method of steel. For example, the chemical composition may be measured using ICP-AES (Inductively Coupled Plasma-Atomic Emission Spectrometry). Specifically, the chemical composition is specified by measuring a test piece collected from the steel sheet with a predetermined measuring device under a condition based on a calibration curve prepared in advance. C and S may be measured using a combustion-infrared absorption method, and N may be measured using an inert gas fusion-thermal conductivity method.

When the non-oriented electrical steel sheet has an insulating coating on the surface thereof, the analysis may be performed after the insulating coating is mechanically removed with a disc grinder or the like.

<Texture>

The non-oriented electrical steel sheet according to the embodiment has a controlled texture when a plane that is parallel to the rolled surface and has a depth of 1/2 of the sheet thickness (the position of 1/2 of the sheet thickness in the sheet thickness direction) from the surface (when the surface is provided with an insulating coating, the surface of the steel sheet (base steel sheet) excluding the insulating coating, the same applies hereinafter) is measured by a scanning electron microscope with an electron back scattering diffraction function (SEM-EBSD).

Specifically, when Ahkl-uvw is defined as the area fraction of grains having a {hkl}<uvw> orientation (tolerance within 10°) with respect to the entire visual field obtained in the above measurement, A411-011 (hereinafter, may be referred to as {411}<011> ratio) is 15.0% or more. When the {411}<011> ratio is less than 15.0%, excellent magnetic characteristics cannot be obtained. The {411}<011> ratio is preferably 25.0% or more, more preferably 30.0% or more, still more preferably 35.0% or more, still more preferably 40.0% or more, or 55.0% or more. The upper limit is not particularly limited, but may be 80.0% or less from the viewpoint of manufacture load.

The non-oriented electrical steel sheet according to the embodiment preferably has a small percentage of the {111} orientation ({ 111 } <uvw> orientation). The {111} orientation is an orientation that hinders in-plane magnetization, and when the percentage of the {111} orientation (may be referred to as {111} ratio) is 10.0% or less, more excellent magnetic characteristics can be obtained. The {111} ratio is preferably 8.0% or less, more preferably 7.0% or less, and still more preferably 5.0% or less. The lower limit is not particularly limited, but may be 1.0% or more from the viewpoint of manufacturing load.

The area fraction of the specific orientation grains of the non-oriented electrical steel sheet according to the embodiment can be measured by the following method. That is, for the area fraction of specific orientation grains, a target specific orientation is extracted (tolerance is set to 10°, and hereinafter, expressed as tolerance within 10°) from a measurement region by a scanning electron microscope (SEM) with an electron back scattering diffraction (EBSD) function observed under the following measurement conditions, using OIM Analysis7.3 (manufactured by TSL solutions). The extracted area is divided by the area of the measurement region to obtain the percentage. This percentage is defined as the area fraction of the specific orientation grains.

In the embodiment, "the area fraction of grains having a {hkl}<uvw> crystal orientation (tolerance within 10°) with respect to the measurement region" and "the area fraction of grains having a {hkl} crystal orientation (tolerance within 10°) with respect to the measurement region" may be simply referred to as "{hkl}<uvw> ratio" and "{hkl} ratio", respectively. In the description of the crystal orientation, it is assumed that the tolerance is within 10°.

Details of the measurement conditions for determining the area fraction of each orientation grain (Ahkl-uvw) are as follows.

- Measuring device: SEM model number "JSM-6400 (manufactured by JEOL Ltd.)", EBSD detector model number "HIKARI (manufactured by TSL solutions)", or an apparatus similar thereto was used
- Step interval: 5.0 $\mu$m
- Magnification: 100 times
- Measuring object: the plane that is parallel to the rolled surface at a depth of 1/2 of the sheet thickness from the surface
- Measurement region: rectangular region of 1000 $\mu$m or more $\times$ 1000 $\mu$m or more

<Average Grain Size>

In the non-oriented electrical steel sheet according to the embodiment, when the grains are not coarsened and the average grain size is too small, there is a concern that the iron loss is deteriorated. On the other hand, when the grains are excessively coarsened and the average grain size is too large, not only the workability is deteriorated but also the eddy-current loss may be deteriorated. Therefore, the non-oriented electrical steel sheet preferably has an average grain size of 50 to 150 $\mu$m, more preferably 70 to 120 $\mu$m.

The average grain size can be measured, for example, in an arbitrary cross section by the cutting method of JIS G0551: 2020. For example, the measurement range is a rectangular region including the entirety in the sheet thickness direction and 1000 $\mu$m or more in the direction orthogonal to the sheet thickness direction.

<Sheet Thickness>

The sheet thickness of the non-oriented electrical steel sheet according to the embodiment is not particularly limited. Usually, as the sheet thickness decreases, the iron loss decreases, but the magnetic flux density decreases. In view of this, when the sheet thickness is 0.20 mm or more, the iron loss is lower and the magnetic flux density is higher. When the sheet thickness is 0.50 mm or less, the iron loss can remain low. Therefore, the non-oriented electrical steel sheet according to the embodiment has a sheet thickness of preferably 0.20 to 0.50 mm, and more preferably 0.25 to 0.35 mm.

<Magnetic Characteristics>

The non-oriented electrical steel sheet according to the embodiment is controlled in the chemical composition and the texture as described above. As the magnetic characteristics thereof, B50D is 1.70 T or more, wherein the B50D is an average of a magnetic flux density B50 in a 45 degree direction with respect to a rolling direction and a magnetic flux density B50 in a 135 degree direction with respect to the rolling direction; and W10D/400D is 10.4 W/kg or less, wherein the W10D/400D is an average of an iron loss W10/400 in a 45 degree direction with respect to the rolling direction and an iron loss W10/400 in a 135 degree direction with respect to the rolling direction.

The B50D is preferably 1.73 T or more, and more preferably 1.76 T or more.

The W10D/400D is preferably 10.0 W/kg or less.

The angle against the rolling direction means the angle formed with the rolling direction in the rolled surface, where the 0 degree direction is the rolling direction (L direction), and the 90 degree direction is the width direction (C direction).

The W10/400 is an iron loss under excitation of 1.0 T and 400 Hz.

The magnetic flux density and the iron loss can be measured by performing a test in accordance with Methods of measurement of the magnetic properties of electrical steel strip and sheet by means of a single sheet tester specified in JIS C 2556: 2015. Instead of collecting a test piece having a size specified in JIS, a test piece having a smaller size, for example, a test piece having a width of 55 mm $\times$ a length of 55 mm may be collected and measured in accordance with the test method for single sheet magnetic properties specified in JIS C 2556: 2015, using a small single sheet tester corresponding thereto. When a test piece having a width of 55 mm $\times$ a length of 55 mm cannot be collected, two test pieces having a width of 8 mm $\times$ a length of 16 mm may be used as a test piece having a width of 16 mm $\times$ a length of 16 mm, and measured in accordance with the test method for single sheet magnetic properties.

In general, the magnetic characteristics of a non-oriented electrical steel sheet is often evaluated as the average value of the rolling direction of the steel sheet (the longitudinal direction of the coil, L direction) and the vertical direction thereof (the width direction of the coil, C direction). This is to consider in-plane anisotropy, and many proposed conventional non-oriented electrical steel sheets are low in such a magnetic anisotropy. However, these conventional non-oriented electrical steel sheets are often inferior in magnetic properties in the direction of $\pm$45 degrees with respect to the rolling direction (coil oblique direction) as compared with the two directions (L and C directions). Therefore, there is a problem in use as a split core designed so that the main magnetization direction of the core is a direction of $\pm$45 degrees with respect to the rolling direction of the steel sheet.

On the other hand, the non-oriented electrical steel sheet according to the embodiment has excellent magnetic characteristics in the 45 degree direction and in the 135 degree direction (that is, the direction of $\pm$45 degrees with respect to the rolling direction) as described above.

Therefore, the non-oriented electrical steel sheet according to the embodiment is particularly suitable for use as a split core designed so that the main magnetization direction of the core is a direction of $\pm$45 degrees with respect to the rolling direction of the steel sheet, and is further suitable for a split core or the like of a drive motor of an electric vehicle or a hybrid vehicle applied to a high frequency range of 1000 Hz or more.

When B50L(T) is defined as an average of a magnetic flux density B50(T) in a 0 degree direction with respect to the rolling direction and a magnetic flux density B50(T) in a 90 degree direction with respect to the rolling direction, the B50D and the B50L preferably satisfy the formula (2) below. In this case, it is more suitable as the use described above.

$$\mathrm{B50D/B50L} \geq 1.05 \cdots (2).$$

The non-oriented electrical steel sheet according to the embodiment is controlled in the chemical composition and the texture as described above, so that the magnetic characteristics deterioration (stress sensitivity) is small when compressive stress acts.

The stress sensitivity can be evaluated by, for example, an iron loss deterioration ratio calculated from an iron loss W10/50 (45° direction) under no stress and an iron loss W10/50 (45° direction) under a compressive stress of 10 MPa.

[Core (Iron Core)]

The core according to the embodiment is made of the non-oriented electrical steel sheet according to the embodiment, specifically, made of a plurality of laminated non-oriented electrical steel sheets according to the embodiment that have been processed into a predetermined shape.

Since the above-described features of the non-oriented electrical steel sheet are not changed through processing, the non-oriented electrical steel sheet constituting the core has the same features as that of the non-oriented electrical steel sheet according to the embodiment described above. Specifically, the non-oriented electrical steel sheet includes, as a chemical composition, in terms of mass%, 0.0100% or less of C, 1.50 to 4.00% of Si, 0.0001 to 1.00% of sol.Al, 0.0100% or less of S, 0.0100% or less of N, 2.50 to 5.00% in total of one or more selected from the group consisting of Mn, Ni, and Cu, 0.000 to 1.000% of Co, 0.000 to 0.400% of Sn, 0.000 to 0.400% of Sb, 0.000 to 0.400% of P, 0.0000 to 0.0100% in total of one or more selected from the group consisting of Mg, Ca, Sr, Ba, Ce, La, Nd, Pr, Zn, and Cd, wherein, in terms of mass%, when [Mn] is defined as a Mn content, [Ni] is defined as a Ni content, [Cu] is defined as a Cu content, [Si] is defined as a Si content, [sol.Al] is defined as a sol.Al content, and [P] is defined as a P content, a formula (1) below is satisfied, and a balance of Fe and impurities; the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD; the non-oriented electrical steel sheet having a magnetic flux density B50D of 1.70 T or more, wherein the B50D is an average of a magnetic flux density in a 45 degree direction with respect to a rolling direction and a magnetic flux density in a 135 degree direction with respect to the rolling direction; and the non-oriented electrical steel sheet having an iron loss W10D/400D of 10.4 W/kg or less, wherein the W10D/400D is an average of an iron loss in a 45 degree direction with respect to the rolling direction and an iron loss in a 135 degree direction with respect to the rolling direction:

$$(2 \times [\mathrm{Mn}] + 2.5 \times [\mathrm{Ni}] + [\mathrm{Cu}]) - ([\mathrm{Si}] + 2 \times [\mathrm{sol.Al}] + 4 \times [\mathrm{P}]) \geq 1.50\% \cdots (1).$$

For example, the core according to the embodiment is a split core of a drive motor of an electric vehicle or a hybrid vehicle.

The core (iron core) according to the embodiment includes both the core of a stator (stator core) and the core of a rotor (rotor core).

[Rotary electric machine]

The rotary electric machine according to the embodiment includes: a stator; a rotor arranged on an inner peripheral side of the stator; and a case that is in close contact with the stator from an outer peripheral side of the stator and fixes the stator, wherein at least one of the stator and the rotor has the core according to the embodiment.

Even after the core of the stator and/or the rotor are incorporated in the rotary electric machine, the features thereof do not change. Therefore, the core of the stator and/or the rotor included in the rotary electric machine according to the embodiment has the same features as that of the non-oriented electrical steel sheet constituting the core according to the embodiment described above.

For example, the rotary electric machine according to the embodiment is a drive motor of an electric vehicle or a hybrid vehicle.

When the rotary electric machine according to the embodiment is a drive motor, the non-oriented electrical steel sheet according to the embodiment having low stress sensitivity and excellent magnetic characteristics in a direction of ±45 degrees with respect to the rolling direction is used as the core, thereby obtaining an effect of reducing the motor loss. In particular, when the core is designed so that the main magnetization direction of the core is a direction of ±45° with respect to the rolling direction of the steel sheet, or when the non-oriented electrical steel sheets are laminated to obtain a laminated core and fixed by calking to obtain a calked core, the effect is remarkable.

When the chemical composition, the texture, and the magnetic characteristics of the non-oriented electrical steel sheet constituting the core included in the rotary electric machine is evaluated, the rotary electric machine is disassembled by a known method to take out the core, and one non-oriented electrical steel sheet is take out from the core, thereafter test for evaluating may performed in the same manner as in the non-oriented electrical steel sheet described above.

Although the detailed method of disassembling the rotary electric machine is different for each actual rotary electric machine, for example, first, the rotary electric machine is taken out from the machine including the rotary electric machine. Thereafter, a part of the case (housing) of the rotary electric machine is removed by machining. Then, the stator and the rotor are separated. When there is a permanent magnet in the rotor at this time, it is desirable to insert a spacer such as a plastic sheet between the stator and the rotor because magnetic attraction force is generated. Thereafter, the stator is removed from the housing. Since the stator has windings, the windings are removed or partially cut. Excluding a steel sheet at the top of the lamination of the stators or a steel sheet that has been damaged when the winding has been cut, a sample is collected from other places. In many cases, the lamination is fastened by calking or welding. In the case of calking, it is possible to peel the lamination by, for example, inserting a cutter blade into a gap between the stacked steel sheets. In the case of welding, it is possible to peel the lamination by cutting a welded portion with a hand grinder or the like.

The rotor often has a coil end made of a material other than an electrical steel sheet. Therefore, the rotor is separated into two by machining using a non-magnetic blade near the longitudinal center of the rotor. Thereafter, the lamination is peeled in the same manner as the stator described above. At that time, it is desirable to exclude a portion affected by machining.

[Manufacturing Method]

Next, an example of each of the manufacturing methods of the non-oriented electrical steel sheet according to the embodiment, the core according to the embodiment, and the rotary electric machine according to the embodiment will be described. For conditions and steps that are not described, known conditions can be applied.

The non-oriented electrical steel sheet according to the embodiment can obtain the effect as long as it has the above characteristics regardless of the manufacturing method. However, the manufacturing method as described below, including a hot rolling step, a cooling step, a cold rolling step, an intermediate annealing step, a second cold rolling (hereinafter, skin pass rolling step), and a final annealing step, is preferable because the effect is stably obtained.

Preferred conditions for each step will be described. For conditions that are not described, known conditions can be applied.

Hereinafter, in the embodiment, as the Ar3 temperature, the Ar1 temperature, and the Ac1 temperature (all in a unit of °C), those obtained by the following methods are used.

The Ar3 temperature and the Ar1 temperature are determined from a change in thermal expansion of the steel material (steel sheet) during cooling at an average cooling rate of 1 °C/sec, and the Ac1 temperature is determined from a change in thermal expansion of the steel material (steel sheet) during heating at an average heating rate of 1 °C/sec. The average cooling rate and the average heating rate are average values in the range from room temperature to 1200°C.

<Hot Rolling Step>

In the hot rolling step, hot rolling is performed on a steel material satisfying the above-described chemical composition to manufacture a hot-rolled steel sheet. The hot rolling step includes a heating process and a rolling process.

The steel material is, for example, a slab manufactured by normal continuous casting, and the steel material having the above-described composition is manufactured by a known method. For example, molten steel is manufactured in a converter, an electric furnace, or the like. The manufactured molten steel is secondarily refined by a degassing equipment or the like to obtain molten steel having the above chemical composition (the chemical composition does not substantially change in the subsequent steps). A slab is cast by a continuous casting method or an ingot-making method using molten steel. Blooming of the cast slab may be performed.

In the heating process, it is preferable to heat the steel material having the above-described chemical composition to 1000 to 1200°C. Specifically, the steel material is charged into a heating furnace or a soaking furnace and heated in the furnace. The holding time at the heating temperature in the heating furnace or the soaking furnace is not particularly limited, and is, for example, 30 to 200 hours.

In the rolling process, multi-pass rolling is performed on the steel material heated in the heating process to manufacture a hot-rolled steel sheet. The "pass" means that the steel sheet passes through one rolling stand having a pair of work rolls and undergoes rolling. The hot rolling may be performed, for example, by performing tandem rolling using a tandem rolling mill including a plurality of rolling stands (each rolling stand has a pair of work rolls) arranged in a line to perform multi-pass rolling, or by performing reverse rolling having a pair of work rolls to perform multi-pass rolling. From the viewpoint of productivity, it is preferable to perform a plurality of rolling passes using a tandem rolling mill.

The rolling in the rolling process (rough rolling and finish rolling) is preferably performed at a temperature in the $\gamma$ region (Ar3 temperature or higher). That is, it is preferable to perform hot rolling so that the temperature at the time of passing through the final pass of finish rolling (finish rolling temperature FT (°C)) is equal to or higher than the Ar3 temperature.

The finish rolling temperature FT means the surface temperature (°C) of the steel sheet on the rolling stand exit side where the final pass rolling is performed in the rolling process during the hot rolling step. The finish rolling temperature FT can be measured by, for example, a non contact type thermometer installed on the rolling stand exit side on which the final pass rolling is performed. The finish rolling temperature FT means, for example, an average value of the temperature measurement results in the central portion in the sheet width direction of the portion where the total length of the steel sheet is equally divided into 10 sections in the rolling direction to obtain 10 sections and one section at the front end and one section at the rear end are excluded.

<Cooling Step>

In the cooling step, the steel sheet (hot-rolled steel sheet) after the hot rolling step (after completion of finish rolling) is cooled. By transformation from austenite to ferrite by this cooling, moderately fine grains with high strain are obtained. As cooling conditions, it is preferable that cooling is started 0.10 seconds or more after passing through the final pass of finish rolling (after elapse of 0.10 seconds or more), and cooling is performed so that the surface temperature of the hot-rolled steel sheet becomes 300°C or more and Ar1 temperature or less after 3 seconds (not performing immediate rapid cooling). In this way, by avoiding immediate rapid cooling, a special rapid cooling device becomes unnecessary, which is also advantageous in terms of manufacture (cost). In addition, through immediate rapid cooling, the texture of the hot-rolled steel sheet becomes a microstructure in which the non-recrystallized austenite is transformed, and tends to become a texture developed in the {100}<011> orientation as the microstructure after the final annealing to be performed thereafter. On the other hand, when immediate rapid cooling is not performed, it is presumed that the texture of the hot-rolled steel sheet becomes a microstructure in which partially recrystallized austenite is transformed, and is easily developed in the {411}<011> orientation as the microstructure after the final annealing thereafter. That is, in order to increase the {411}<011> ratio, it is important to transform partially recrystallized austenite, and it is preferable not to perform immediate rapid cooling.

The cooling condition is preferably set such that the average grain size of the hot-rolled steel sheet before the cold rolling is 3 to 10 μm. When the grain size is suitable and not excessively refined, and cold rolling is performed subsequently, α fibers are developed after intermediate annealing; and after the subsequent skin pass and final annealing, the {411} <011> orientation, which is normally less likely to develop, can be developed. On the other hand, when the grains are excessively coarsened, the α fiber is hardly developed after cold rolling and intermediate annealing, and a desired {411} <011> ratio may fail to be obtained.

In order to set the average grain size to 3 to 10 μm in the hot-rolled steel sheet before cold rolling, the temperature may be set to the Ar1 temperature or lower within 3 seconds after passing through the final pass of the finish rolling. On the other hand, when the cooling stop temperature is lower than 300°C, there is a concern that the average grain size in the hot-rolled steel sheet is excessively refined. Therefore, the cooling stop temperature is preferably 300°C or higher.

The hot-rolled steel sheet temperature (especially the finish rolling temperature) and the surface temperature of the hot-rolled steel sheet 3 seconds after passing through the final pass of the finish rolling are measured by the following method.

When a hot rolling equipment line used for manufacturing a non-oriented electrical steel sheet includes: a cooling device and a conveying line (for example, a conveying roller) disposed downstream of a hot rolling mill; a thermometer for measuring the surface temperature of a hot-rolled steel sheet disposed on the exit side of a rolling stand for performing a final pass of the hot rolling mill; and also a plurality of thermometers arranged on the conveying roller disposed downstream of the rolling stand along the conveying line, the hot rolling temperature and the surface temperature of the hot-rolled steel sheet 3 seconds after passing through the final pass of the finish rolling may be measured by the thermometers disposed in the hot rolling equipment line.

The cooling is performed using a cooling device disposed downstream of the rolling stand on which the final pass is performed. A plurality of water-cooling devices is generally disposed, and a thermometer is disposed on the inlet side of each water-cooling device. The cooling device may be, for example, a well-known water-cooling device or a well-known forced air-cooling device. Preferably, the cooling device is a water-cooling device. The coolant of the water-cooling device may be water or a mixed fluid of water and air.

<Cold Rolling Step>

In the cold rolling step, the hot-rolled steel sheet is subjected to cold rolling to obtain a cold-rolled steel sheet. The hot-rolled steel sheet is preferably not subjected to hot-band annealing before the cold rolling step in order to develop the α fiber after cold rolling. The hot-band annealing mentioned here means, for example, a heat treatment in which the heating temperature is Ac1 temperature or lower and 300°C or higher.

The cold rolling may be performed, for example, by performing tandem rolling using a tandem rolling mill including a plurality of rolling stands (each rolling stand has a pair of work rolls) arranged in a line to perform multi-pass rolling. Alternatively, reverse rolling may be performed by a Sendzimir rolling mill or the like having a pair of work rolls to perform one-pass rolling or multi-pass rolling. From the viewpoint of productivity, it is preferable to perform multi-pass rolling using a tandem rolling mill.

In the cold rolling, the cold rolling is performed without performing annealing treatment in the middle of the cold rolling. For example, when the reverse rolling is performed and the multi-pass cold rolling is performed, the multi-pass cold rolling is performed without interposing annealing treatment between the passes of the cold rolling. When annealing is performed between the passes, a desired orientation cannot be developed in the steps described later.

The cold rolling may be performed in only one pass using a reverse type rolling mill. When cold rolling using a tandem type rolling mill is performed, cold rolling is continuously performed in a plurality of passes (passes at each rolling stand).

In the embodiment, in order to develop the α fiber, the rolling reduction RR1 (%) in the cold rolling is preferably 75 to 95%. The rolling reduction RR1 is more preferably 78 to 92%. The rolling reduction RR1 is defined as follows.

Rolling reduction RR1 (%) = (1- sheet thickness after rolling of final pass in cold rolling/sheet thickness before rolling of first pass in cold rolling) × 100

<Intermediate Annealing Step>

In the intermediate annealing step, the steel sheet after the cold rolling step (cold-rolled steel sheet) is subjected to intermediate annealing.

More specifically, annealing of raising the temperature (heating) to an annealing temperature (intermediate annealing temperature T1) (°C) of 600°C to Ac1 temperature or less at a temperature rising rate of 400 °C/sec or more is performed.

The steel sheet having a predetermined chemical composition is subjected to a combination of the intermediate annealing step, the subsequent skin pass rolling step, and the final annealing step under appropriate conditions, so that the A411-011 can be enhanced.

When the temperature rising rate to the annealing temperature is less than 400 °C/sec, there is a concern that sufficient recovery does not occur and a desired texture cannot be obtained. More preferably, the temperature rising rate is 600 °C/sec or more, or 1000 °C/sec or more. From the viewpoint of reducing the percentage of the {111} orientation, which is disadvantageous for magnetic characteristics, the temperature rising rate to the annealing temperature is preferably higher.

On the other hand, the faster the temperature rising rate, the more preferable it is for the formation of the texture. However, in the case of obtaining a temperature rising rate of more than 2000 °C/sec, the cost is greatly increased because a special device or control is required, and thus the temperature rising rate may be 2000 °C/sec or less, and is more preferably 1500 °C/sec or less.

The temperature rising rate is calculated by dividing the temperature change from room temperature (for example, 25°C) to the annealing temperature by the time required for temperature rise.

In addition, when the annealing temperature of the intermediate annealing exceeds the Ac1 temperature, a part of the microstructure of the steel sheet may be transformed into austenite, the transformation accompanied by crystal orientation change, and thereby the {411}<011> oriented grains do not sufficiently grow during the subsequent skin pass rolling and final annealing, failing to obtain a high magnetic flux density.

On the other hand, if the temperature of the intermediate annealing is too low, no recrystallization may occur, and {411}<011> oriented grains do not sufficiently grow during the subsequent skin pass rolling and final annealing, failing to obtain a high magnetic flux density. Therefore, the intermediate annealing temperature T1 (°C) is preferably 600°C or higher.

The intermediate annealing temperature T1 (°C) is a sheet temperature (surface temperature) in the vicinity of the extraction port of the annealing furnace.

The holding time at the intermediate annealing temperature T1 (°C) in the intermediate annealing step may be a time well known to those skilled in the art. The holding time at the intermediate annealing temperature T1 (°C) is, for example, 5 to 60 seconds, but is not limited thereto.

In addition, the atmosphere at the time of intermediate annealing is not particularly limited, and for example, an atmosphere gas (drying) containing 20% of $H_2$ by volume percentage and $N_2$ as the remainder is used. The cooling rate of the steel sheet after the intermediate annealing is not particularly limited, and is, for example, 5.0 to 60.0 °C/sec.

<Skin Pass Rolling Step>

In the skin pass rolling step, the cold-rolled steel sheet after the intermediate annealing step is subjected to rolling (cold rolling) at room temperature in the air. The skin pass rolling uses, for example, a reverse rolling mill typified by the above-described Sendzimir rolling mill, or a tandem rolling mill.

In the skin pass rolling step, rolling is performed without performing an annealing treatment in the middle. For example, when reverse rolling is performed and skin pass rolling is performed in a plurality of passes, the rolling is performed in a plurality of passes without interposing an annealing treatment between the passes. The skin pass rolling may be performed with only one pass using a reverse type rolling mill. When skin pass rolling using a tandem type rolling mill is performed, rolling is continuously performed in a plurality of passes (passes at each rolling stand).

In the embodiment, after a strain is introduced into the steel sheet by hot rolling and cold rolling, the strain introduced into the steel sheet is temporarily reduced by intermediate annealing. Then, skin pass rolling is performed. As a result, by performing the intermediate annealing while reducing the strain excessively introduced by the cold rolling in the intermediate annealing, the {111} grains are suppressed from preferentially recrystallizing in the sheet surface of the steel sheet, and the {411}<011> crystal oriented grains remain. Then, an appropriate strain amount is introduced into each grain in the steel sheet in the skin pass rolling, and grain growth by bulging is easily generated in the final annealing of the next step.

The rolling reduction RR2 in the skin pass rolling is preferably 10 to 15%. When the rolling reduction RR2 is less than 10%, the strain amount becomes too small, and the final annealing time required for grain growth by bulging becomes long. On the other hand, when the rolling reduction RR2 exceeds 15%, the strain amount becomes too large, normal grain growth occurs instead of bulging, and {411}<148> or {111}<112> grows by final annealing.

Here, the rolling reduction RR2 is defined as follows.

Rolling reduction RR2 (%) = (1- sheet thickness after rolling of final pass in skin pass rolling/sheet thickness before rolling of first pass in skin pass rolling) $\times$ 100

The number of passes in the skin pass rolling may be only one pass (that is, only one rolling is performed) or may be multi-pass rolling.

The skin pass rolling performed in the embodiment is significantly different in effect from the skin pass rolling performed after the final annealing. By performing hot rolling, cooling, cold rolling, intermediate annealing, skin pass rolling, and final annealing in this order under predetermined conditions, a predetermined microstructure can be obtained.

<Final Annealing Step>

In the final annealing step, the steel sheet after the skin pass rolling step is annealed by holding the steel sheet at an annealing temperature T2 (°C) of 850°C or more and Ac1 temperature or less for 2 hours or more. When the final annealing temperature T2 (°C) is 850°C or higher, grain growth by bulging is promoted, and the development degree in the {411}<011> orientation can be enhanced. When T2 is less than 850°C, there is a concern that the grain growth is insufficient.

Conventionally, final annealing has been often performed at about 750°C. This is because it has been considered that the effect is not enhanced and the cost is increased even if the temperature is further increased. On the other hand, the present inventors have found that the conditions of the intermediate annealing (such as the rapid heating) and the conditions of the skin pass rolling are combined, thereby the annealing temperature is increased to enhance the development degree of the texture and further improve the magnetic characteristics.

On the other hand, when the final annealing temperature T2 (°C) exceeds the Ac1 temperature, a part of the microstructure of the steel sheet is transformed to austenite, grain growth due to bulging does not occur, and a desired {411}<011> ratio cannot be obtained.

In addition, in a case where the annealing time is less than 2 hours, even if the final annealing temperature T2 (°C) is 850°C or higher and the Ac1 temperature or lower, grain growth due to bulging does not sufficiently occur, and there is a concern that the development degree of the {411}<011> orientation decreases.

On the other hand, the annealing time of the final annealing is not particularly limited, and may be 10 hours or less because the effect is saturated even if the annealing time exceeds 10 hours.

The temperature rising rate TR2 to the final annealing temperature T2 in the final annealing step may be any temperature rising rate known to those skilled in the art. 40 °C/hour or more and less than 200 °C/hour are exemplified, but the present invention is not limited to this range.

The temperature rising rate TR2 is determined by the following method.

The steel sheet having the above chemical composition and subjected from the hot rolling to the skin pass is attached with a thermocouple to obtain a sample steel sheet. The sample steel sheet attached with a thermocouple is subjected to temperature raising, and the time from the start of the temperature raising to the arrival of the final annealing temperature T2 is measured. The temperature rising rate TR2 is determined based on the measured time.

The atmosphere during the final annealing step is not particularly limited. The atmosphere in the final annealing step may be, for example, an atmosphere gas (dry) containing 20% of $H_2$ by volume percentage and $N_2$ as the remainder, a 100% of hydrogen ($H_2$) atmosphere, or the like. The cooling rate of the steel sheet after final annealing is not particularly limited. The cooling rate is, for example, 5 to 20 °C/sec.

When a core is formed from the non-oriented electrical steel sheet, the steel sheet is punched and/or laminated. The steel sheet may be punched and/or laminated after the final annealing step, or after the skin pass rolling step and before the final annealing step.

When the steel sheet is punched and/or laminated before the final annealing step, the final annealing (annealing time of 2 hours or more at an annealing temperature of 850°C or higher and Ac1 temperature or lower) may be performed also as stress relief annealing (in other words, the stress relief annealing may be substituted with the final annealing, and performed under the same conditions as in the final annealing).

In the manufacturing method of the non-oriented electrical steel sheet according to the embodiment, for example, shot blasting and/or pickling may be performed after the cooling step and before the cold rolling step in the manufacture step. In the shot blasting, the steel sheet after hot rolling is subjected to shot blasting to break and remove the scale formed on the surface of the steel sheet after hot rolling. In the pickling, the steel sheet after hot rolling is subjected to a pickling treatment. In the pickling treatment, for example, a hydrochloric acid aqueous solution is used as a pickling bath. The scale formed on the surface of the steel sheet is removed by pickling. After the cooling step and before the cold rolling step, shot blasting may be performed, followed by performing pickling. Further, after the cooling step and before the cold rolling step, pickling may be performed without performing shot blasting. After the cooling step and before the cold rolling step, shot blasting may be performed without performing pickling treatment. Shot blasting and pickling are optional steps. Therefore, neither the shot blasting step nor the pickling step may be performed.

<Insulating Coating Forming Step>

In the method for manufacturing an electrical steel sheet according to the embodiment, an insulating coating may be further formed on the surface of the steel sheet after the final annealing (non-oriented electrical steel sheet) by coating after the final annealing step. The insulating coating forming step is an optional step. Therefore, coating is not necessarily performed after the final annealing.

The type of the insulating coating is not particularly limited. The insulating coating may be an organic component or an inorganic component, and the insulating coating may contain an organic component and an inorganic component. The inorganic component is, for example, dichromic acid-boric acid-based, phosphoric acid-based, silica-based, or the like. The organic component is, for example, a general acrylic resin, an acrylic styrene resin, an acrylic silicon resin, a silicon resin, a polyester resin, an epoxy resin, or a fluorine resin. In consideration of coatability, a preferable resin is an emulsion type resin. An insulating coating that exerts adhesive ability by heating and/or pressurization may be applied. The insulating coating having adhesive ability is, for example, an acrylic resin, a phenolic resin, an epoxy resin, or a melamine resin.

The core according to the embodiment is obtained as follows: the non-oriented electrical steel sheet according to the embodiment obtained by the above method is used as the material, and subjected to a working step and/or an annealing (stress relief) step as necessary.

For example, when the non-oriented electrical steel sheet has not been punched and/or laminated before the final annealing step, the non-oriented electrical steel sheet is punched into a predetermined shape and a plurality of sheets is laminated, and then stress relief annealing is performed instead of final annealing, so that the core can be obtained.

The punching condition is not particularly limited. For example, using a progressive die, the core can be manufactured through before the subsequent laminating step.

The fixing method at the time of lamination is also not limited. The examples thereof include methods such as calking, adhesion, and welding.

When stress relief annealing is performed instead of final annealing, annealing is performed by holding an annealing temperature of 850°C or more and Ac1 temperature or less for 2 hours or more.

On the other hand, when the non-oriented electrical steel sheet is punched and/or laminated to have the shape of the core before the final annealing step, the non-oriented electrical steel sheet after the final annealing step can be used as it is as the core.

In addition, the rotary electric machine according to the embodiment can be obtained as follows: the core according to the embodiment is wound with wire to obtain a rotor or a stator, and then combined with another rotor or stator; and the pair of rotor and stator is fixed by a case.

Examples

Next, the non-oriented electrical steel sheet of the present invention will be specifically described with reference to examples. The following examples are merely examples of the non-oriented electrical steel sheet according to the embodiment of the present invention, and the non-oriented electrical steel sheet according to the present invention is not limited to the following examples.

An ingot having the chemical composition shown in Table 1 (the unit is mass%, and the balance is Fe and impurities) was produced by casting molten steel. In Table 1, the "Left side of formula" represents the value of the left side of the formula (1) described above. In addition, the "Total of coarse precipitate forming element such as Mg" represents the total of one or more selected from the group consisting of Mg, Ca, Sr, Ba, Ce, La, Nd, Pr, Zn, and Cd.

No. 8 was a component type in which α was stable and α-γ transformation did not occur.

This prepared ingot was heated to 1150°C, held for 1 hour, and then subjected to hot rolling to perform finish rolling so that the finish rolling temperature FT was shown in Table 2.

After completion of hot rolling (after passing through the final pass), the time until the start of cooling was set as shown in Table 2, and cooling was performed so that the temperature of the steel sheet 3 seconds after the start of cooling was the temperature shown in Table 2.

The hot-rolled steel sheet thus obtained was not subjected to hot-band annealing, scale was removed by pickling, and cold rolling was performed at a rolling reduction RR1 shown in Table 2.

Then, intermediate annealing was performed by heating the steel sheet to an intermediate annealing temperature T1 shown in Table 2 at a temperature rising rate shown in Table 2 in an atmosphere made of 20% of hydrogen and 80% of nitrogen in terms of volume percentage, followed by holding at T1 for 30 seconds. After holding, the steel sheet was cooled to 50°C or less at an average cooling rate of 20.0 °C/sec.

The cold rolled steel sheet after the intermediate annealing was subjected to skin pass rolling at a rolling reduction RR2 shown in Table 2.

Next, the steel sheet after the skin pass rolling was subjected to final annealing at a temperature rising rate of 100 °C/hour and a final annealing temperature T2 shown in Table 2 in an atmosphere of 100% hydrogen. At this time, the holding time at the final annealing temperature T2 was 2 hours.

A non-oriented electrical steel sheet was prepared as described above. However, No. 7 was broken into two sheets at the time of cold rolling, and therefore the subsequent steps were not performed.

In order to investigate the texture of the obtained non-oriented electrical steel sheet, a part of the steel sheet was cut off to collect a test piece, and the test piece was subjected to thickness reduction processing to reduce the thickness from the surface to the 1/2 of the thickness.

The plane that is parallel to the rolled surface and has a depth of 1/2 of the sheet thickness from the surface, which was exposed by reducing the thickness of the test piece, was used as a measurement plane, and the {411}<011> ratio and the {111} ratio were measured by SEM-EBSD under the above-described conditions.

The measurement plane was subjected to the cutting method of JIS G0551 (2020), thereby measuring the average grain size.

The magnetic characteristics of the obtained non-oriented electrical steel sheet were measured in the following manner.

<Magnetic Flux Density>

A sample for the test method for single sheet magnetic properties having a size of 55 mm square (width 55 mm $\times$ length 55 mm) was collected as a measurement sample in the two directions of 0° and 45° with respect to the rolling direction. Then, for these two kinds of samples, magnetic flux density B50 was determined at 0°, 45°, 90°, and 135° with respect to the rolling direction in accordance with JISC2556 (2015).

The average of the magnetic flux density at 45° and 135° with respect to the rolling direction was defined as B50D, and the average of the magnetic flux density at 0° and 90° with respect to the rolling direction was defined as B50L.

<Iron Loss and Iron Loss Deterioration Ratio>

For the iron loss W10/400, the measurement sample collected in the direction of 45° with respect to the rolling direction was used, and the iron loss was determined in the direction of 45° and the direction of 135° with respect to the rolling direction in accordance with JISC2556 (2015), and the average thereof was defined as the W10D/400D.

In addition, regarding the iron loss deterioration ratio Wx [%] of the iron loss W10/50 under compressive stress, the iron loss deterioration ratio Wx was calculated from the following formula, where the iron loss W10/50 (45° direction) under no stress was defined as W10/50(0), and the iron loss W10/50 (45° direction) under a compressive stress of 10 MPa was defined as W10/50(10).

$$\mathrm{Wx} = \{\mathrm{W}10/50(10) - \mathrm{W}10/50(0)\}/\mathrm{W}10/50(0)$$

When the iron loss deterioration ratio of W10/50 under the compressive stress in the 45° direction with respect to the rolling direction was 40% or less, it was determined that the iron loss deterioration ratio (stress sensitivity) was low.

[Table 1]

Chemical composition (balance: Fe and impurities)

| Item No. | C [mass%] | Si [mass%] | sol.Al [mass%] | S [mass%] | N [mass%] | Mn [mass%] | Ni [mass%] | Cu [mass%] | Total of Mn, Ni, Cu [mass%] | Co [mass%] | Sn [mass%] | Sb [mass%] | P [mass%] | Total of coarse precipitate forming element such as Mg [mass%] | Left side of formula |
|---|---|---|---|---|---|---|---|---|---|---|---|---|---|---|---|
| 1 | 0.0018 | 2.50 | 0.005 | 0.0018 | 0.0011 | 3.00 | 0.00 | 0.00 | 3.00 | 0.000 | 0.000 | 0.000 | 0.020 | 0.000 | 3.41 |
| 2 | 0.0012 | 2.40 | 0.12 | 0.0015 | 0.0014 | 2.80 | 0.20 | 0.00 | 3.00 | 0.000 | 0.030 | 0.010 | 0.010 | 0.004 | 3.42 |
| 3 | 0.0009 | 2.50 | 0.80 | 0.0008 | 0.0008 | 4.00 | 0.00 | 0.00 | 4.00 | 0.000 | 0.000 | 0.110 | 0.100 | 0.000 | 3.50 |
| 4 | 0.0012 | 2.00 | 0.50 | 0.0015 | 0.0014 | 2.60 | 0.00 | 0.15 | 2.75 | 0.000 | 0.150 | 0.000 | 0.010 | 0.000 | 2.31 |
| 5 | 0.0013 | 3.10 | 0.30 | 0.0021 | 0.0011 | 3.50 | 0.00 | 0.00 | 3.50 | 0.200 | 0.000 | 0.000 | 0.000 | 0.000 | 3.30 |
| 6 | 0.0012 | 1.00 | 0.60 | 0.0015 | 0.0014 | 2.50 | 0.00 | 0.00 | 2.50 | 0.000 | 0.150 | 0.000 | 0.010 | 0.000 | 2.76 |
| 7 | 0.0012 | 3.50 | 0.80 | 0.0015 | 0.0014 | 5.20 | 0.00 | 0.00 | 5.20 | 0.000 | 0.150 | 0.000 | 0.010 | 0.000 | 5.26 |
| 8 | 0.0018 | 2.50 | 0.30 | 0.0018 | 0.0011 | 2.00 | 0.00 | 0.00 | 2.00 | 0.000 | 0.000 | 0.000 | 0.020 | 0.000 | 0.82 |
| 9 | 0.0018 | 2.50 | 0.005 | 0.0018 | 0.0011 | 3.00 | 0.00 | 0.00 | 3.00 | 0.000 | 0.000 | 0.000 | 0.020 | 0.000 | 3.41 |
| 10 | 0.0018 | 2.50 | 0.005 | 0.0018 | 0.0011 | 3.00 | 0.00 | 0.00 | 3.00 | 0.000 | 0.000 | 0.000 | 0.020 | 0.000 | 3.41 |
| 11 | 0.0009 | 2.50 | 0.80 | 0.0008 | 0.0008 | 4.00 | 0.00 | 0.00 | 4.00 | 0.000 | 0.000 | 0.110 | 0.100 | 0.000 | 3.50 |
| 12 | 0.0022 | 3.43 | 0.02 | 0.0042 | 0.0023 | 3.70 | 0.00 | 0.00 | 3.70 | 0.000 | 0.000 | 0.000 | 0.006 | 0.005 | 3.91 |
| 13 | 0.0022 | 3.43 | 0.02 | 0.0042 | 0.0023 | 3.70 | 0.00 | 0.00 | 3.70 | 0.000 | 0.000 | 0.000 | 0.006 | 0.005 | 3.91 |
| 14 | 0.0022 | 3.43 | 0.02 | 0.0042 | 0.0023 | 3.70 | 0.00 | 0.00 | 3.70 | 0.000 | 0.000 | 0.000 | 0.006 | 0.005 | 3.91 |
| 15 | 0.0018 | 2.50 | 0.005 | 0.0018 | 0.0011 | 3.00 | 0.00 | 0.00 | 3.00 | 0.000 | 0.000 | 0.000 | 0.020 | 0.000 | 3.41 |
| 16 | 0.0018 | 2.50 | 0.005 | 0.0018 | 0.0011 | 3.00 | 0.00 | 0.00 | 3.00 | 0.000 | 0.000 | 0.000 | 0.020 | 0.000 | 3.41 |
| 17 | 0.0013 | 3.10 | 0.30 | 0.0021 | 0.0011 | 3.50 | 0.00 | 0.00 | 3.50 | 0.000 | 0.000 | 0.000 | 0.100 | 0.000 | 2.90 |
| 18 | 0.0013 | 3.10 | 0.30 | 0.0021 | 0.0011 | 3.50 | 0.00 | 0.00 | 3.50 | 0.000 | 0.000 | 0.000 | 0.100 | 0.000 | 2.90 |
| 19 | 0.0009 | 2.50 | 0.80 | 0.0008 | 0.0008 | 4.00 | 0.00 | 0.00 | 4.00 | 0.000 | 0.000 | 0.000 | 0.000 | 0.000 | 3.90 |
| 20 | 0.0018 | 2.00 | 0.50 | 0.0022 | 0.0014 | 2.60 | 0.00 | 0.15 | 2.75 | 0.000 | 0.150 | 0.050 | 0.010 | 0.000 | 2.31 |

[Table 2]

| Item | Transformation point | | | Hot rolling step | | | Cold rolling step | Intermediate annealing step | | Skin pass rolling step | Final annealing step | Evaluation |
|---|---|---|---|---|---|---|---|---|---|---|---|---|
| No. | Ar3 point | Ar1 point | Ac1 point | Finish rolling temperature FT | Time from final pass to cooling start | Temperature after 3 sec | Cold rolling reduction RR1 | Temperature rising rate before T1 | Intermediate annealing temperature T1 | Skin pass rolling reduction RR2 | Final annealing temperature T2 | |
| | [°C] | [°C] | [°C] | [°C] | sec | [°C] | [%] | [°C/s] | [°C] | [%] | [°C] | |
| 1 | 812 | 779 | 932 | 950 | 0.10 | 700 | 91 | 1000 | 700 | 13 | 850 | Invention example |
| 2 | 809 | 777 | 929 | 950 | 0.50 | 400 | 91 | 1200 | 700 | 13 | 850 | Invention example |
| 3 | 787 | 759 | 908 | 850 | 0.12 | 600 | 91 | 1300 | 700 | 13 | 850 | Invention example |
| 4 | 942 | 913 | 1012 | 950 | 0.50 | 400 | 91 | 1100 | 700 | 13 | 900 | Invention example |
| 5 | 772 | 745 | 913 | 950 | 0.10 | 700 | 91 | 1000 | 700 | 13 | 850 | Invention example |
| 6 | 783 | 751 | 919 | 950 | 0.50 | 400 | 91 | 1000 | 700 | 13 | 850 | Comparative example |
| 7 | 651 | 633 | 760 | 850 | 0.12 | 400 | 91 | Broken into two sheets during cold rolling and next step cannot be performed | | | | Comparative example |
| 8 | - | - | - | 950 | 0.10 | 700 | 91 | 1000 | 700 | 13 | 850 | Comparative example |
| 9 | 812 | 779 | 932 | 650 | 0.10 | 550 | 91 | 1000 | 700 | 13 | 850 | Comparative example |
| 10 | 812 | 779 | 932 | 950 | 0.00 | 200 | 91 | 1000 | 700 | 13 | 850 | Comparative example |
| 11 | 787 | 759 | 908 | 850 | 0.10 | 600 | 91 | 20 | 700 | 13 | 850 | Comparative example |

| Item | Transformation point | | | Hot rolling step | | | Cold rolling step | Intermediate annealing step | | Skin pass rolling step | Final annealing step | Evaluation |
|---|---|---|---|---|---|---|---|---|---|---|---|---|
| No. | Ar3 point | Ar1 point | Ac1 point | Finish rolling temperature FT | Time from final pass to cooling start | Temperature after 3 sec | Cold rolling reduction RR1 | Temperature rising rate before T1 | Intermediate annealing temperature T1 | Skin pass rolling reduction RR2 | Final annealing temperature T2 | |
| | [°C] | [°C] | [°C] | [°C] | sec | [°C] | [%] | [°C/s] | [°C] | [%] | [°C] | |
| 12 | 805 | 699 | 897 | 950 | 0.10 | 500 | 91 | 1000 | 700 | 0 | 850 | Comparative example |
| 13 | 805 | 699 | 897 | 950 | 0.10 | 500 | 91 | 1000 | 700 | 2 | 850 | Comparative example |
| 14 | 805 | 699 | 897 | 950 | 0.10 | 500 | 91 | 1000 | 700 | 25 | 850 | Comparative example |
| 15 | 812 | 779 | 932 | 950 | 0.10 | 700 | 91 | 1000 | 550 | 13 | 850 | Comparative example |
| 16 | 812 | 779 | 932 | 950 | 0.10 | 700 | 91 | 1000 | 1000 | 13 | 850 | Comparative example |
| 17 | 772 | 745 | 913 | 950 | 0.10 | 700 | 91 | 1000 | 700 | 13 | 700 | Comparative example |
| 18 | 772 | 745 | 913 | 950 | 0.10 | 700 | 91 | 1000 | 700 | 13 | 1000 | Comparative example |
| 19 | 808 | 702 | 900 | 850 | 0.12 | 600 | 91 | 400 | 700 | 13 | 850 | Invention example |
| 20 | 942 | 913 | 1012 | 950 | 0.50 | 400 | 91 | 1100 | 700 | 13 | 750 | Comparative example |

EP 4 692 402 A1

[Table 3]

| No. | Texture | | Sheet thickness | Microstructure | Magnetic characteristics | | | | Evaluation |
|---|---|---|---|---|---|---|---|---|---|
| | {411}<011> area fraction | {111} area fraction | | Average grain size | B50D | B50D/B50L | W1OD/400D | Iron loss deterioration ratio Wx | |
| | [%] | [%] | [mm] | | [T] | [T] | [W/kg] | [%] | - |
| 1 | 50.3 | 5.9 | 0.25 | 92 | 1.81 | 1.19 | 10.0 | 30.6 | Invention example |
| 2 | 52.8 | 3.4 | 0.25 | 73 | 1.76 | 1.15 | 10.2 | 29.1 | Invention example |
| 3 | 53.4 | 6.2 | 0.25 | 94 | 1.78 | 1.13 | 10.4 | 28.8 | Invention example |
| 4 | 51.6 | 4.1 | 0.25 | 91 | 1.76 | 1.16 | 10.3 | 30.2 | Invention example |
| 5 | 51.9 | 5.8 | 0.25 | 79 | 1.77 | 1.14 | 10.1 | 29.4 | Invention example |
| 6 | 50.1 | 5.9 | 0.25 | 81 | 1.79 | 1.13 | 12.2 | 30.1 | Comparative example |
| 7 | - | - | - | - | - | - | - | - | Comparative example |
| 8 | 9.2 | 15.8 | 0.25 | 75 | 1.61 | 0.99 | 13.0 | 44.7 | Comparative example |
| 9 | 13.1 | 15.0 | 0.25 | 71 | 1.62 | 0.99 | 12.9 | 42.1 | Comparative example |
| 10 | 14.1 | 6.9 | 0.25 | 73 | 1.77 | 1.13 | 10.1 | 51.2 | Comparative example |
| 11 | 30.7 | 13.1 | 0.25 | 91 | 1.72 | 1.10 | 13.4 | 30.0 | Comparative example |
| 12 | 13.2 | 14.5 | 0.25 | 48 | 1.60 | 0.99 | 13.9 | 42.2 | Comparative example |
| 13 | 14.8 | 10.2 | 0.25 | 44 | 1.68 | 1.08 | 14.2 | 41.3 | Comparative example |
| 14 | 11.2 | 11.8 | 0.25 | 73 | 1.52 | 0.97 | 15.2 | 45.2 | Comparative example |
| 15 | 10.4 | 12.9 | 0.25 | 77 | 1.61 | 0.99 | 13.4 | 43.2 | Comparative example |
| 16 | 11.5 | 13.1 | 0.25 | 59 | 1.63 | 1.01 | 15.9 | 40.7 | Comparative example |
| 17 | 14.2 | 11.2 | 0.25 | 41 | 1.61 | 1.00 | 14.7 | 32.8 | Comparative example |
| 18 | 14.4 | 10.8 | 0.25 | 57 | 1.67 | 1.11 | 15.4 | 40.8 | Comparative example |
| 19 | 51.1 | 10.1 | 0.25 | 81 | 1.76 | 1.12 | 10.4 | 30.1 | Invention example |
| 20 | 14.7 | 10.7 | 0.25 | 42 | 1.62 | 0.99 | 14.3 | 33.1 | Comparative example |

As can be seen from Tables 1 to 3, in Nos.1 to 5 and 19 as the invention examples, the chemical composition fell within the scope of the present invention, the texture fell within the scope of the present invention, and the magnetic characteristics (magnetic flux density, iron loss, and iron loss deterioration ratio) were excellent.

On the other hand, in Nos. 6, 8 to 18, and 20, which were comparative examples, one or more of the chemical composition, the texture, and the magnetic characteristics were out of the scope of the present invention.

INDUSTRIAL APPLICABILITY

According to the present invention, it is possible to provide a non-oriented electrical steel sheet having low stress sensitivity and excellent magnetic characteristics in a direction of $\pm 45$ degrees with respect to the rolling direction; a core manufactured using the non-oriented electrical steel sheet; and a rotary electric machine manufactured using the core. Therefore, industrial applicability is high.

**Claims**

1. A non-oriented electrical steel sheet including, as a chemical composition,

   in terms of mass%,
   0.0100% or less of C,
   1.50 to 4.00% of Si,
   0.0001 to 1.00% of sol.Al,
   0.0100% or less of S,
   0.0100% or less of N,
   2.50 to 5.00% in total of one or more selected from the group consisting of Mn, Ni, and Cu,
   0.000 to 1.000% of Co,
   0.000 to 0.400% of Sn,
   0.000 to 0.400% of Sb,
   0.000 to 0.400% of P,
   0.0000 to 0.0100% in total of one or more selected from the group consisting of Mg, Ca, Sr, Ba, Ce, La, Nd, Pr, Zn, and Cd, wherein
   in terms of mass%, when [Mn] is defined as a Mn content, [Ni] is defined as a Ni content, [Cu] is defined as a Cu content, [Si] is defined as a Si content, [sol.Al] is defined as a sol.Al content, and [P] is defined as a P content, a formula (1) below is satisfied, and
   a balance of Fe and impurities;
   the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD;
   the non-oriented electrical steel sheet having a magnetic flux density B50D of 1.70 T or more, wherein the B50D is an average of a magnetic flux density in a 45 degree direction with respect to a rolling direction and a magnetic flux density in a 135 degree direction with respect to the rolling direction; and
   the non-oriented electrical steel sheet having an iron loss W10D/400D of 10.4 W/kg or less, wherein the W10D/400D is an average of an iron loss in a 45 degree direction with respect to the rolling direction and an iron loss in a 135 degree direction with respect to the rolling direction:

$$(2 \times [\mathrm{Mn}] + 2.5 \times [\mathrm{Ni}] + [\mathrm{Cu}]) - ([\mathrm{Si}] + 2 \times [\mathrm{sol.Al}] + 4 \times [\mathrm{P}]) \geq 1.50\% \cdots (1).$$

2. The non-oriented electrical steel sheet according to claim 1, wherein

   when B50L is defined as an average of a magnetic flux density in a 0 degree direction with respect to the rolling direction and a magnetic flux density in a 90 degree direction with respect to the rolling direction, the B50D and the B50L satisfy a formula (2) below:

$$\mathrm{B50D/B50L} \geq 1.05 \cdots (2).$$

3. A core comprising a non-oriented electrical steel sheet, the non-oriented electrical steel sheet including,

as a chemical composition,
in terms of mass%,
0.0100% or less of C,
1.50 to 4.00% of Si,
0.0001 to 1.00% of sol.Al,
0.0100% or less of S,
0.0100% or less of N,
2.50 to 5.00% in total of one or more selected from the group consisting of Mn, Ni, and Cu,
0.000 to 1.000% of Co,
0.000 to 0.400% of Sn,
0.000 to 0.400% of Sb,
0.000 to 0.400% of P,
0.0000 to 0.0100% in total of one or more selected from the group consisting of Mg, Ca, Sr, Ba, Ce, La, Nd, Pr, Zn, and Cd, wherein in terms of mass%, when [Mn] is defined as a Mn content, [Ni] is defined as a Ni content, [Cu] is defined as a Cu content, [Si] is defined as a Si content, [sol.Al] is defined as a sol.Al content, and [P] is defined as a P content, a formula (1) below is satisfied, and
a balance of Fe and impurities;
the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD;
the non-oriented electrical steel sheet having a magnetic flux density B50D of 1.70 T or more, wherein the B50D is an average of a magnetic flux density in a 45 degree direction with respect to a rolling direction and a magnetic flux density in a 135 degree direction with respect to the rolling direction; and
the non-oriented electrical steel sheet having an iron loss W10D/400D of 10.4 W/kg or less, wherein the W10D/400D is an average of an iron loss in a 45 degree direction with respect to the rolling direction and an iron loss in a 135 degree direction with respect to the rolling direction:

$$(2 \times [Mn] + 2.5 \times [Ni] + [Cu]) - ([Si] + 2 \times [sol.Al] + 4 \times [P]) \geq 1.50\% \cdots (1).$$

4. A rotary electric machine comprising: a stator; a rotor arranged on an inner peripheral side of the stator; and a case that is in close contact with the stator from an outer peripheral side of the stator and fixes the stator, wherein

at least one of the stator and the rotor has a core constituted by a non-oriented electrical steel sheet including, as a chemical composition,
in terms of mass%,
0.0100% or less of C,
1.50 to 4.00% of Si,
0.0001 to 1.00% of sol.Al,
0.0100% or less of S,
0.0100% or less of N,
2.50 to 5.00% in total of one or more selected from the group consisting of Mn, Ni, and Cu,
0.000 to 1.000% of Co,
0.000 to 0.400% of Sn,
0.000 to 0.400% of Sb,
0.000 to 0.400% of P,
0.0000 to 0.0100% in total of one or more selected from the group consisting of Mg, Ca, Sr, Ba, Ce, La, Nd, Pr, Zn, and Cd, wherein in terms of mass%, when [Mn] is defined as a Mn content, [Ni] is defined as a Ni content, [Cu] is defined as a Cu content, [Si] is defined as a Si content, [sol.Al] is defined as a sol.Al content, and [P] is defined as a P content, a formula (1) below is satisfied, and
a balance of Fe and impurities;
the non-oriented electrical steel sheet having an area fraction A411-011 of 15.0% or more, wherein Ahkl-uvw is defined as an area fraction of grains having a {hkl}<uvw> orientation with respect to an entire visual field when a plane that is parallel to a rolled surface and has a depth of 1/2 of a sheet thickness from a surface is measured by SEM-EBSD;
the non-oriented electrical steel sheet having a magnetic flux density B50D of 1.70 T or more, wherein the B50D is an average of a magnetic flux density in a 45 degree direction with respect to a rolling direction and a magnetic flux density in a 135 degree direction with respect to the rolling direction; and

the non-oriented electrical steel sheet having an iron loss W10D/400D of 10.4 W/kg or less, wherein the W10D/400D is an average of an iron loss in a 45 degree direction with respect to the rolling direction and an iron loss in a 135 degree direction with respect to the rolling direction:

$$(2 \times [\text{Mn}] + 2.5 \times [\text{Ni}] + [\text{Cu}]) - ([\text{Si}] + 2 \times [\text{sol.Al}] + 4 \times [\text{P}]) \geq 1.50\% \cdots (1).$$

## INTERNATIONAL SEARCH REPORT

| International application No. |
|---|
| **PCT/JP2024/014127** |

**A. CLASSIFICATION OF SUBJECT MATTER**

*C22C 38/00*(2006.01)i; *C21D 8/12*(2006.01)i; *C21D 9/46*(2006.01)i; *C22C 38/60*(2006.01)i; *H01F 1/147*(2006.01)i
FI: C22C38/00 303U; C22C38/60; H01F1/147 175; C21D8/12 A; C21D9/46 501A

According to International Patent Classification (IPC) or to both national classification and IPC

**B. FIELDS SEARCHED**

Minimum documentation searched (classification system followed by classification symbols)

C22C38/00-38/60; C21D8/12; C21D9/46; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/210998 A1 (NIPPON STEEL CORPORATION) 06 October 2022 (2022-10-06) entire text | 1-4 |
| A | WO 2022/211007 A1 (NIPPON STEEL CORPORATION) 06 October 2022 (2022-10-06) entire text | 1-4 |
| A | WO 2021/205880 A1 (NIPPON STEEL CORPORATION) 14 October 2021 (2021-10-14) entire text | 1-4 |
| P, A | JP 2023-58067 A (NIPPON STEEL CORPORATION) 25 April 2023 (2023-04-25) entire text | 1-4 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/014127**

| Patent document cited in search report | | | Publication date (day/month/year) | Patent family member(s) | | | Publication date (day/month/year) |
|---|---|---|---|---|---|---|---|
| WO | 2022/210998 | A1 | 06 October 2022 | US | 2024/0047106 | A1 | |
| | | | | entire text | | | |
| | | | | EP | 4317506 | A1 | |
| | | | | CN | 116848279 | A | |
| | | | | KR | 10-2023-0118709 | A | |
| WO | 2022/211007 | A1 | 06 October 2022 | US | 2024/0043970 | A1 | |
| | | | | entire text | | | |
| | | | | EP | 4276210 | A1 | |
| | | | | KR | 10-2023-0118706 | A | |
| | | | | CN | 116897213 | A | |
| WO | 2021/205880 | A1 | 14 October 2021 | US | 2023/0106818 | A1 | |
| | | | | entire text | | | |
| | | | | EP | 4134456 | A1 | |
| | | | | CN | 115315536 | A | |
| | | | | KR | 10-2022-0142512 | A | |
| JP | 2023-58067 | A | 25 April 2023 | (Family: none) | | | |

Form PCT/ISA/210 (patent family annex) (July 2022)

**REFERENCES CITED IN THE DESCRIPTION**

**Patent documents cited in the description**

- JP 2023061313 A
- JP 2017145462 A
- JP 4218077 B
- JP 5256916 B
- JP 2011111658 A
- JP 2019183185 A
- JP 2020076138 A
- JP 2020100860 A
- JP 2020139198 A